# EUROPEAN PATENT APPLICATION

(11) **EP 4 310 120 A2**
(43) Date of publication of application: **24.01.2024**
(21) Application number: 23207970.7
(22) Date of filing: 21.09.2012
(51) Int. Cl.: C08G 18/00

(54) **FOAMS AND ARTICLES MADE FROM FOAMS CONTAINING HCFO OR HFO BLOWING AGENTS**

(30) Priority: 09.12.2011 US 201161569061 P
(62) Divisional of application: 12855052.2
(71) Applicant: Honeywell International Inc., Morris Plains, NJ 07950 (US)
(72) Inventor: Williams, David, New York, 14051 (US); Ling, YiuKeung, New York, 14226 (US); Qin, Sanglu, Shanghai, 201203 (CN); Lu, Bin, Shanghai, 201203 (CN); Pan, Rongwei, Shanghai, 201203 (CN)
(74) Representative: Stepney, Gregory John

(57) **Abstract**

The present invention relates to polyurethane foams having a polymeric foam structure including a plurality of closed cells therein; and an HFO or HCFO blowing agent, including HCFO-1233zd or HFO-1234ze. In certain aspects, the present invention relates to foam premixes, and the resulting foam structures, that include HCFO-1233zd as blowing agent used alone, or in certain aspects, in a blend with a second co-blowing agent such as, but not limited to, cyclopentane, iso-pentane, or n-pentane.

## Description

### CROSS REFERENCES TO RELATED APPLICATIONS

The present application claims priority to U.S. Provisional application Ser. No. 61/569,061, filed on December 9, 2011, the contents of which are incorporated herein by reference in their entirety.

### FIELD OF THE INVENTION

The present invention pertains to blowing agents, to foams, to articles made from foams and to methods for the preparation thereof, and in particular to polyurethane and polyisocyanurate foams and methods for the preparation and uses thereof.

### BACKGROUND OF THE INVENTION

The class of foams known as low density, rigid to semi-rigid polyurethane or polyisocyanurate foams has utility in a wide variety of insulation applications, including roofing systems, building panels, building envelope insulation, spray applied foams, one and two component froth foams, insulation for refrigerators and freezers. Such foams are also used as so called integral skin foam for cushioning and safety application such as steering wheels and other automotive or aerospace cabin parts, shoe soles, amusement park restraints, and the like. An important factor in the large-scale commercial success of many rigid to semi-rigid polyurethane foams has been the ability of such foams to provide a good balance of properties, including performance, environmental and safety properties. In general, rigid polyurethane and polyisocyanurate foams should provide outstanding thermal insulation, excellent fire resistance properties, and superior structural properties at reasonably low densities.

As is known, blowing agents are used to form the cellular structure required for such foams. It has been common to use certain liquid fluorocarbon blowing agents because of their ease of use, among other factors. Certain fluorocarbons are capable of not only acting as blowing agents by virtue of their volatility, but also are encapsulated or entrained in the closed cell structure of the foam and are generally the major contributor to the thermal conductivity properties of the rigid urethane foams. After the foam is formed, the k-factor associated with the foam produced provides a measure of the ability of the foam to resist the transfer of heat through the foam material. As the k-factor decreases, this is an indication that the material is more resistant to heat transfer and therefore a better foam for insulation purposes. Thus, materials that produce lower k-factor foams are generally desirable and advantageous.

In recent years, concern over climate change has driven the development of a new generation of fluorocarbon compounds, which meet the requirements of both ozone depletion and climate change regulations. Two such fluorocarbons are trans-1,3,3,3-tetrafluoropropene (1234ze(E)) and trans-1-chloro-3,3,3-trifluoropropene (1233zd(E)). Honeywell International sells products under the registered trademark SOLSTICE^{®}, including under the trade designation SOLSTICE^{®} GBA containing trans-1,3,3,3-tetrafluoropropene (1234ze(E)) and under the trade designation SOLSTICE^{®} LBA containing trans-1-chloro-3,3,3-trifluoropropene.

### SUMMARY

In certain non-limiting aspects, the present invention relates to a thermal insulating foam including a thermoset polymer having a plurality of closed cells and a gaseous composition contained in a plurality of said closed cells, said gaseous composition comprising greater than about 25 mole% and less than about 95 mole% trans-1-chloro-3,3,3-trifluoropropene and greater than 5 mole% and less than about 75 mole % of a second component selected from the group consisting of cyclopentane, isopentane, n-pentane and combinations of two or more of these. Applicants have found that certain important advantages can be unexpectedly achieved by the selection of such second components as a co-blowing agent within carefully selected concentration ranges. Among these advantages are reduced cost of the blowing agent composition while unexpectedly maintaining, or in some cases unexpectedly improving one or more of the performance properties of the blowing agent/foam, including thermal conductivity, foam stability, and/or stability.

In certain preferred embodiments, these unexpected advantages are achieved for blowing agents that comprise greater than about 25 mole% to less than about 95 mole% trans-1-chloro-3,3,3-trifluoropropene and greater than about 5 mole% to less than about 75 mole % of the second component, and more preferably in certain embodiments for blowing agents that comprise greater than about 25 mole% to less than about 75 mole% trans-1-chloro-3,3,3-trifluoropropene and greater than about 25 mole% to less than about 75 mole % of the second component. In further preferred embodiments, these unexpected advantages are achieved for blowing agents that comprise greater than about 25 mole% to less than about 65 mole% trans-1-chloro-3,3,3-trifluoropropene and greater than about 35 mole% to less than about 75 mole % of the second component, or in certain preferred embodiments greater than about 25 mole% to less than about 50 mole% trans-1-chloro-3,3,3-trifluoropropene and greater than about 50 mole% to less than about 75 mole % of the second component

Unless otherwise specifically indicated herein, the mole percentages for trans-1-chloro-3,3,3-trifluoropropene and the second component are based on the total of said trans-1-chloro-3,3,3-trifluoropropene and said second component. In certain preferred aspects, the thermal insulating foam contains a K-value after 28 days of aging at 20 °F that is not greater than about 0.15, or in certain embodiments is not greater than about 0.13 after 28 days of aging at 20 °F. In certain preferred aspects, the second component is present in an amount of less than about 60 mole %, or in further preferred embodiments in an amount of less than about 50 mole %.

In further non-limiting, but in certain instances preferred, embodiments, the second component comprises n-pentane, which may be provided in an amount of from greater than about 50 mole% to less than about 75 mole %. Such foams, in certain aspects, have a K-value after 28 days of aging at 20 °F of not greater than about 0.14, or in certain embodiments a K-value after 28 days of aging at 40 °F of not greater than about 0.14.

In even further, but in certain instances preferred, aspects, the foam comprises or consists essentially of iso-pentane as the second component. Such foams, in certain aspects, have a K-value after 28 days of aging at 40 °F of not greater than about 0.15.

In even further, but in certain instances preferred, aspects, the second component of the foam comprises or consists essentially of cyclo-pentane. This component may be provided in an amount of about 50 mole % or less, or in certain preferred embodiments from about 5 mole % to about 50 mole % cyclopentane and from about 50 mole % to about 95 mole % trans-1-chloro-3,3,3-trifluoropropene. In further preferred embodiments cyclopentane is provided in an amount from about 25 mole % to about 50 mole % and trans-1-chloro-3,3,3-trifluoropropene in an amount from about 50 mole % to about 75 mole %, or in even further preferred embodiments cyclopentane is provided in an amount from about 35 mole % to about 50 mole % and trans-1-chloro-3,3,3-trifluoropropene from about 50 mole % to about 75 mole %. Such foams, in certain aspects have a K-value after 28 days of aging at 20 °F of not greater than about 0.13, or a K-value after 28 days of aging at 55 °F of not greater than about 0.14.

The present invention also relates to a pour-in-place foam panel that includes any one or more of the foam compositions according to the present invention. In certain preferred aspects, however, the pour-in-place foam comprises a blend of trans-1-chloro-3,3,3-trifluoropropene and cyclopentane, particularly, though not exclusively, where cyclopentane is present in an amount from about 5 mole % to about 75 mole % and trans-1-chloro-3,3,3-trifluoropropene is provided in an amount from about 25 mole % to about 95 mole %, in further preferred embodiments cyclopentane is provided in an amount from about 5 mole % to about 50 mole % and trans-1-chloro-3,3,3-trifluoropropene from about 50 mole % to about 95 mole %, in even further preferred embodiments the cyclopentane is provided in an amount from about 25 mole % to about 75 mole % and trans-1-chloro-3,3,3-trifluoropropene is provided in an amount from about 25 mole % to about 75 mole %, in even further preferred embodiments cyclopentane is provided in an amount from about 25 mole % to about 50 mole % cyclopentane and trans-1-chloro-3,3,3-trifluoropropene from about 50 mole % to about 75 mole %, and in even further preferred embodiments cyclopentane is provided in an amount from about 35 mole % to about 50 mole % cyclopentane and trans-1-chloro-3,3,3-trifluoropropene from about 50 mole % to about 65 mole %.

The present invention also relates to a thermal insulating article comprising any of the foams provided herein.

In even further aspects, the present invention relates to a polyol premix for forming a polyurethane or polyisocyanurate pour-in-place foam panel including a blowing agent composition according to the present invention. In certain of such embodiments, the premix composition includes a blowing agent that comprises greater than about 25 mole% and less than about 75 mole% trans-1-chloro-3,3,3-trifluoropropene and greater than 25 mole% and less than about 75 mole % of a second component selected from the group consisting of cyclopentane, isopentane, n-pentane and combinations of two or more of these. The polyol component may be present in preferred embodiments in an amount of from about 60 wt.% to about 95 wt.% of the premix and the blowing agent composition in accordance with the present invention is present in the premix in an amount of from about 1 wt.% to about 30 wt.%.

The blowing agent composition may also include one or more additional blowing agents other than trans-1-chloro-3,3,3-trifluoropropene or the second component, which may be selected from the group consisting of water, organic acids that produce CO₂ and/or CO, hydrocarbons; ethers, halogenated ethers; esters, alcohols, aldehydes, ketones, pentafluorobutane; pentafluoropropane; hexafluoropropane; heptafluoropropane; trans-1,2 dichloroethylene; methylal, methyl formate, 1-chloro-1,2,2,2-tetrafluoroethane (HCFC-124); 1,1-dichloro-1-fluoroethane (HCFC-141b); 1,1,1,2-tetrafluoroethane (HFC-134a); 1,1,2,2-tetrafluoroethane (HFC-134); 1-chloro 1,1-difluoroethane (HCFC-142b); 1,1,1,3,3-pentafluorobutane (HFC-365mfc); 1,1,1,2,3,3,3-heptafluoropropane (HFC-227ea); trichlorofluoromethane (CFC-11); dichlorodifluoromethane (CFC-12); dichlorofluoromethane (HCFC-22); 1,1,1,3,3,3-hexafluoropropane (HFC-236fa); 1,1,1,2,3,3-hexafluoropropane (HFC-236e); 1,1,1,2,3,3,3-heptafluoropropane (HFC-227ea), difluoromethane (HFC-32); 1,1-difluoroethane (HFC-152a); 1,1,1,3,3-pentafluoropropane (HFC-245fa); 1,3,3,3-tetrafluoropropene (HFO-1234ze); 1,1,1,4,4,4-hexafluorobut-2-ene (HFO-1336mzzm); butane; isobutane; and combinations thereof.

Additional agents for use in the premix may include, but are not limited to, a silicone surfactant, a non-silicone surfactant, a metal catalyst, an amine catalyst, a flame retardant, and combinations thereof.

The foregoing embodiments are not necessarily limiting to the invention. To this end, the present invention includes additional and all alternative embodiments provided below, including those expressly discussed and those apparent to the skilled artisan on the basis of the disclosure and/or data provided.

### BRIEF DESCRIPTION OF THE DRAWINGS

FIG. 1 illustrates initial thermal conductivity of foams with blowing agents 1233zd (Solstice LBA), 245fa, cyclopentane, or 141b.
FIG. 2 illustrates thermal conductivity of foams with blowing agents 1233zd (Solstice LBA), 245fa, cyclopentane, or 141b after 3 months of aging.
FIG. 3 illustrates initial thermal conductivity of foams with various blends of 1233zd (Solstice LBA) and cyclopentane - tested from about 5°F to about 45 °F.
FIG. 4 illustrates thermal conductivity of foams with various blends of 1233zd (Solstice LBA) and cyclopentane after 3 months of aging - tested from about 5°F to about 45 °F.
FIG. 5 illustrates initial thermal conductivity of foams with various blends of 1233zd (Solstice LBA) and iso-pentane - tested from about 20°F to about 110 °F.
FIG. 6 illustrates thermal conductivity of foams with various blends of 1233zd (Solstice LBA) and iso-pentane after 28 days of aging - tested from about 20°F to about 110 °F.
FIG. 7 illustrates initial thermal conductivity of foams with various blends of 1233zd (Solstice LBA) and n-pentane - tested from about 20°F to about 110 °F.
FIG. 8 illustrates thermal conductivity of foams with various blends of 1233zd (Solstice LBA) and n-pentane after 28 days of aging - tested from about 20°F to about 110 °F.
FIG. 9 illustrates initial thermal conductivity of foams with various blends of 1233zd (Solstice LBA) and cyclopentane - tested from about 20°F to about 110 °F.
FIG. 10 illustrates thermal conductivity of foams with various blends of 1233zd (Solstice LBA) and cyclopentane after 28 days of aging - tested from about 20°F to about 110 °F.
FIG. 11 illustrates comparative compressive strengths of foams with various 1233zd (Solstice LBA)/hydrocarbon blends.
FIG. 12 illustrates comparative dimensional stability of foams with various 1233zd (Solstice LBA)/hydrocarbon blends after 28 days of aging.

### DETAILED DESCRIPTION OF THE INVENTION

The present compositions can generally be in the form of blowing agent compositions, foamable compositions, or the resulting foams. In each case, the present invention requires at least one fluoroalkene compound as described herein and optionally but preferably one or more additional components, as described in more detail below.

In certain embodiments, the present invention is directed to blowing agent compositions which may comprise, in addition to either 1234zd(E) or 1233zd(E) at least one additional fluoroalkene containing from 2 to 6, preferably 3 to 5 carbon atoms, more preferably 3 to 4 carbon atoms, and in certain embodiments most preferably three carbon atoms, and at least one carbon-carbon double bond. The fluoroalkene compounds of the present invention are sometimes referred to herein for the purpose of convenience as hydrofluoro-olefins or "HFOs" if they contain at least one hydrogen. Although it is contemplated that the HFOs of the present invention may contain two carbon -- carbon double bonds, such compounds at the present time are not considered to be preferred. For HFOs which also contain at least one chlorine atom, the designation HFCO is sometimes used herein

In further aspects, the HFO or HFCO compounds comprise one or more compounds in accordance with Formula I below: 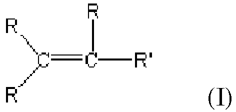 where each R is independently Cl, F, Br, I or H
R' is (CR₂)ₙY,
Y is CRF₂
and n is 0, 1, 2 or 3, preferably 0 or 1, it being generally preferred however that either Br is not present in the compound or when Br is present in the compound there is no hydrogen in the compound.

In highly preferred embodiments, Y is CF₃, n is 0 or 1 (most preferably 0) and at least one of the remaining Rs is F or Cl, and preferably no R is Br, or when Br is present there is no hydrogen in the compound. It is preferred in certain cases that no R in Formula I is Br.

Applicants believe that, in general, the compounds of the above identified Formula I are generally effective and exhibit utility in blowing agent compositions in accordance with the teachings contained herein. However, applicants have surprisingly and unexpectedly found that certain of the compounds having a structure in accordance with the formula described above, as discussed in greater detail below, exhibit a highly desirable low level of toxicity compared to other of such compounds. In further aspects, certain of the compounds of Formula I have highly desirable physical properties and/or thermal conductivity/insulation under a wide array of conditions, as compared to other of such compounds and/or existing blowing agents.

In certain preferred embodiments, the compound of the present invention comprises a C₃ or C₄ HFCO or HFO, preferably a C₃ HFCO or HFO, and more preferably a compound in accordance with Formula I in which Y is CF₃, n is 0, at least one R on the unsaturated terminal carbon is H, and at least one of the remaining Rs is F or Cl. HFCO-1233 is one example of such a preferred HCFO compound, and tetrafluoropropenes, particularly HFO-1234, is one example of such a preferred HFO compound.

The term "HFCO-1233" is used herein to refer to all trifluoromonochloropropenes. Among the trifluoromonochloropropenes are included both cis- and trans-1,1,1-trifluo-3,chlororopropene (HFCO-1233zd or 1233zd). The term "HFCO-1233zd" or "1233zd" is used herein generically to refer to 1,1,1-trifluo-3,chloro-propene, independent of whether it is the cis- or trans-form. The terms "cis HFCO-1233zd" and "transHFCO-1233zd" are used herein to describe the cis- and trans-forms of 1,1,1-trifluo,3-chlororopropene, respectively. The term "HFCO-1233zd" therefore includes within its scope cis HFCO-1233zd (also referred to as 1233zd(Z)), transHFCO-1233zd (also referred to as 1233(E)), and all combinations and mixtures of these.

The term "HFO-1234" includes HFO-1234yf, (cis)HFO-1234ze and (trans)HFO-1234ze, with HFO-1234ze being generally preferred and trans HFO-1234ze being highly preferred in certain embodiments. Although the properties of (cis)HFO-1234ze and (trans)HFO-1234ze differ in at least some respects, it is contemplated that each of these compounds is adaptable for use, either alone or together with other compounds including its stereo isomer, in connection with each of the applications, methods and systems described herein. For example, (trans)HFO-1234ze may be preferred for use in certain systems because of its relatively low boiling point (-19° C), while (cis)HFO-1234ze, with a boiling point of +9° C, may be preferred in other applications. Of course, it is likely that combinations of the cis- and trans- isomers will be acceptable and/or preferred in many embodiments. Accordingly, it is to be understood that the terms "HFO-1234ze" and 1,3,3,3-tetrafluoropropene refer to both stereo isomers, and the use of this term is intended to indicate that each of the cis-and trans- forms applies and/or is useful for the stated purpose unless otherwise indicated.

In certain preferred forms, compositions of the present invention have a Global Warming Potential (GWP) of not greater than about 1000, more preferably not greater than about 500, and even more preferably not greater than about 150. In certain embodiments, the GWP of the present compositions is not greater than about 100 and even more preferably not greater than about 75. As used herein, "GWP" is measured relative to that of carbon dioxide and over a 100 year time horizon, as defined in "The Scientific Assessment of Ozone Depletion, 2002, a report of the World Meteorological Association's Global Ozone Research and Monitoring Project," which is incorporated herein by reference.

In certain preferred forms, the present compositions also preferably have an Ozone Depletion Potential (ODP) of not greater than 0.05, more preferably not greater than 0.02 and even more preferably about zero. As used herein, "ODP" is as defined in "The Scientific Assessment of Ozone Depletion, 2002, A report of the World Meteorological Association's Global Ozone Research and Monitoring Project," which is incorporated herein by reference.

In certain particular, but non-limiting aspects of the present invention, Applicants have come to recognize the existence of unexpected and surprising advantages when 1233zd (preferably the trans form thereof, 1233zd(E)) or 1234ze (preferably the trans form thereof, 1234ze(E)) are combined with one or more of the second components, as described herein, and is used as a blowing agent/contained gas in thermal insulating foams, including panel foam or pour-in-place panel foam applications. One particular advantage provided herein is that the foams and articles formed therefrom have the equivalent or superior physical qualities to existing foams, but provide a much lower GWP. Another advantage is that such foams maintain, and in some embodiments demonstrate improved properties, including thermal properties (e.g. conductivity and insulation) over a wider array of environmental conditions (e.g. temperature and humidity), as compared to foams formed with existing blowing agents, and that those properties are surprisingly maintained as the foam is aged and in that such advantages can be unexpectedly achieved while providing a highly advantageous advantage in the cost of the blowing agent.

As is known by those skilled in the art, polyurethane foam is used extensively as the core insulation material in several types of articles. Previously, some of the most commonly used blowing agents for polyurethane foams included HFC-245fa, HFC-134a and hydrocarbons. Such compounds are commonly used in the majority of the polyurethane foam markets in developing countries. As the low global warming potential initiative emerges in developed countries and the HCFC phase-out in developing countries approaches, there is an increasing worldwide need and desire for low global warming potential (LGWP) blowing agents.

Applicants illustrate herein that one advantage of the present invention is that the resulting foam product including the blowing agent of the present invention, alone or in combination with one or more commonly used other co-blowing agents, has improved characteristics of the foam, and surprisingly, resulted in improved flammability and thermal conductivity across a wide array of temperature conditions and as the foam ages. As demonstrated in the data herein, in insulating panel foam applications, or pour-in-place foam panels, the 1233zd/second component blowing agents of the present invention in preferred embodiments are capable of achieving comparable physical properties (e.g. free rise density, core density, etc.) to foams formed with existing blowing agents, which makes them suitable drop-in replacements within existing foam formulations. Foams formed in accordance with the preferred aspects of the present invention are also demonstrated herein to surprisingly and unexpectedly have excellent thermal insulation properties, initially and after 3 months of aging, than foams formed with 245fa or C5 hydrocarbons alone. They are also surprisingly demonstrated to have superior flammability properties than 141b alone. Accordingly, foams formed in accordance with the present invention exhibit a myriad of improved properties over foams formed with several existing blowing agents.

With regard to cyclopentane as the second component, the preferred blowing agent of the present invention has been surprisingly found to result in improved flammability and thermal stability, initially and particularly after foam aging, as compared to foams produced using cyclopentane alone. More particularly, 1233zd blended with 50 mole% or less of cyclopentane, in certain preferred embodiments, from about 5 mole % to about 50 mole % cyclopentane, in further preferred embodiments between about 25 mole % and about 50 mole % cyclopentane, and in even further preferred embodiments between about 35 mole % and about 50 mole % cyclopentane surprisingly and unexpectedly exhibited similar thermal conductivity to 1233zd, alone, and/or a K-value of less than 0.14 when measured at temperatures below 55 °F. This makes it favorable for use in a wide-array of cold storage applications, such as coolers and freezer, and unexpectedly provided the ability to achieve the advantageous thermal conductivity and/or other properties at a highly advantageous and substantially lower cost to foam production. Examples of cold storage applications for use with such blending blowing agents include, but are not limited to, walk-in coolers and freezers, commercial refrigeration, industrial coolers and freezers, iso-containers or any container used for transporting cold materials, or any similar application where it is desirable to cool or maintain the temperature of an article below room temperature.

1233zd/cyclopentane blends in accordance with the present invention have also been found to unexpectedly impart superior physical properties to the resulting foams. In foams aged under stringent conditions (e.g. at temperatures at or above 90°F and at or above 70°F/95% relative humidity), 1233zd/cyclopentane blends were found to maintain similar dimensional stability as foams using 1233zd alone. This is particularly true in embodiments where cyclopentane is provided in an amount less than about 50 mole %, and in certain embodiments from about 5 mole % to about 50 mole % cyclopentane.

Applicants further demonstrate below that the addition of HCFO-1233zd to blowing agents blends including either iso-pentane or n-pentane has been surprisingly and unexpectedly found to result in improved flammability and thermal conductivity of the resulting foam, initially and after aging, over foams produced using iso-pentane or n-pentane alone. 1233zd blended with 75 mole% or less of isopentane or n-pentane, in certain preferred embodiments from 5 mole % to about 75 mole % of isopentane or n-pentane, in further embodiments from 25 mole % to about 75 mole % of isopentane or n-pentane, from 35 mole % to about 75 mole % of isopentane or n-pentane, or from 50 mole % to about 75 mole % of isopentane or n-pentane is particularly demonstrated to impart improved physical and thermal properties (e.g. a K-value of less than 0.15) to the resulting foams across a wide range of temperatures (20°F to about 110°F). 1233zd blended with 75 mole% to about 50 mole% of n-pentane also, surprisingly and unexpectedly, exhibited similar thermal conductivity to 1233zd, alone, and/or a K-value of less than 0.14 when measured at temperatures below 55 °F. This makes it favorable for use in a wide-array of cold storage applications, such as coolers and freezer, and unexpectedly provided the ability to achieve the advantageous thermal conductivity and/or other properties at a highly advantageous and substantially lower cost to foam production. Examples of cold storage applications for use with such blending blowing agents include, but are not limited to, walk-in coolers and freezers, commercial refrigeration, industrial coolers and freezers, iso-containers or any container used for transporting cold materials, or any similar application where it is desirable to cool or maintain the temperature of an article below room temperature.

1233zd/isopentane and 1233zd/n-pentane blends in accordance with the present invention have also been found to unexpectedly impart superior physical properties to the resulting foams. In foams aged under stringent conditions (e.g. at temperatures at or above 90°F and at or above 70°F/95% relative humidity), certain of these blends were found to maintain similar dimensional stability as foams using 1233zd alone. This is particularly true in embodiments where isopentane or n-pentane were provided in an amount less than about 75 mole %, and in certain preferred embodiments from about 5 mole % to about 75 mole % isopentane or n-pentane. 1233zd/isopentane blends, in particular, were found to exhibit similar dimensional stability to 1233zd, alone, when isopentane was provided at less than 50 mole % (and in certain preferred embodiments from about 5 mole % to about 50 mole %) and the foam was aged for 28 days at 70 °C/95% R.H. Similar observations were made of 1233zd/n-pentane blends when n-pentane was provided at less than 75 mole % and less than 50 mole%.

Accordingly, the present invention relates to the use of 1233zd or 1234ze, but in certain preferred aspects to HCFO-1233zd(E), as a blowing agent in polyol premix and in foams, particularly in premixes and foams useful as a panel foam. In addition to the foregoing, a nonexclusive list of other co-blowing agents, which may be added according to the needs of a particular application, include, but are not limited to, water, organic acids that produce CO₂ and/or CO, hydrocarbons; ethers, halogenated ethers; esters, alcohols, aldehydes, ketones, pentafluorobutane; pentafluoropropane; hexafluoropropane; heptafluoropropane; trans-1,2 dichloroethylene; methylal, methyl formate, 1-chloro-1,2,2,2-tetrafluoroethane (HCFC-124); 1,1-dichloro-1-fluoroethane (HCFC-141b); 1,1,1,2-tetrafluoroethane (HFC-134a); 1,1,2,2-tetrafluoroethane (HFC-134); 1-chloro 1,1-difluoroethane (HCFC-142b); 1,1,1,3,3-pentafluorobutane (HFC-365mfc); 1,1,1,2,3,3,3-heptafluoropropane (HFC-227ea); trichlorofluoromethane (CFC-11); dichlorodifluoromethane (CFC-12); dichlorofluoromethane (HCFC-22); 1,1,1,3,3,3-hexafluoropropane (HFC-236fa); 1,1,1,2,3,3-hexafluoropropane (HFC-236e); 1,1,1,2,3,3,3-heptafluoropropane (HFC-227ea), difluoromethane (HFC-32); 1,1-difluoroethane (HFC-152a); 1,1,1,3,3-pentafluoropropane (HFC-245fa); 1,1,1,4,4,4-hexafluorobut-2-ene (HFO-1336mzzm - including its cis or "Z" isomer); butane; isobutane; or combinations thereof.

The blowing agent of the present invention component is preferably present in the polyol premix composition in an amount of from about 1 wt.% to about 30 wt.%, preferably from about 3 wt.% to about 25 wt.%, and more preferably from about 5 wt.% to about 25 wt.%, by weight of the polyol premix composition. Such amounts result in a foam cell structure containing a gas that comprises in major proportion by weigh, and in certain preferred embodiment consists essentially of, and in other preferred embodiments consists of, a combination of 1233zd(E) and a second component, according to the present invention.

In general, the content of the gas in the resulting foam cell structure is dependent upon the component amounts of blowing agents used in the blend, and the relative percentage of the 1233zd(E) and second component(s) in the blowing agent will preferably correspond substantially to the relative percentage in the gas contained in the cells upon initial formation of the foam.

The polyol component, which may include mixtures of polyols, can be any polyol which reacts in a known fashion with an isocyanate in preparing a polyurethane or polyisocyanurate foam. Useful polyols comprise one or more of a sucrose containing polyol; phenol, a phenol formaldehyde containing polyol; a glucose containing polyol; a sorbitol containing polyol; a methylglucoside containing polyol; an aromatic polyester polyol; glycerol; ethylene glycol; diethylene glycol; propylene glycol; graft copolymers of polyether polyols with a vinyl polymer; a copolymer of a polyether polyol with a polyurea; one or more of (a) condensed with one or more of (b): (a) glycerine, ethylene glycol, diethylene glycol, trimethylolpropane, ethylene diamine, pentaerythritol, soy oil, lecithin, tall oil, palm oil, castor oil;(b) ethylene oxide, propylene oxide, a mixture of ethylene oxide and propylene oxide; or combinations thereof. The polyol component is preferably present in the polyol premix composition in an amount of from about 60 wt.% to about 95 wt.%, preferably from about 65 wt.% to about 95 wt.%, and more preferably from about 70 wt.% to about 90 wt.%, by weight of the polyol premix composition.

In certain embodiments, the polyol premix composition may also contain at least one silicone-containing surfactant. The silicone-containing surfactant is used to aid in the formation of foam from the mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is critical to have a foam with stable cells which do not collapse prior to forming or during foam rise.

Silicone surfactants for use in the preparation of polyurethane or polyisocyanurate foams are available under a number of trade names known to those skilled in this art. Such materials have been found to be applicable over a wide range of formulations allowing uniform cell formation and maximum gas entrapment to achieve very low density foam structures. The preferred silicone surfactant comprises a polysiloxane polyoxyalkylene block co-polymer. Some representative silicone surfactants useful for this invention are Momentive's L-5130, L-5180, L-5340, L-5440, L-6100, L-6900, L-6980 and L-6988; Air Products DC-193, DC-197, DC-5582 , and DC-5598; and B-8404, B-8407, B-8409 and B-8462 from Goldschmidt AG of Essen, Germany. Others are disclosed in U.S. patents 2,834,748; 2,917,480; 2,846,458 and 4,147,847, the contents of which are incorporated herein by reference. The silicone surfactant component is usually present in the polyol premix composition in an amount of from about 0.5 wt.% to about 5.0 wt.%, preferably from about 1.0 wt.% to about 4.0 wt.%, and more preferably from about 1.5 wt.% to about 3.0 wt.%, by weight of the polyol premix composition.

The polyol premix composition may optionally contain a non-silicone surfactant, such as a non-silicone, non-ionic surfactant. Such may include oxyethylated alkylphenols, oxyethylated fatty alcohols, paraffin oils, castor oil esters, ricinoleic acid esters, turkey red oil, groundnut oil, paraffins, and fatty alcohols. A preferred, but non-limiting, non-silicone non-ionic surfactant is LK-443 which is commercially available from Air Products Corporation. When a non-silicone, non-ionic surfactant used, it is present in the polyol premix composition in an amount of from about 0.05 wt.% to about 3.0 wt.%, preferably from about 0.05 wt.% to about 2.5 wt.%, and more preferably from about 0.1 wt.% to about 2.0 wt. %, by weight of the polyol premix composition.

The polyol premix composition may also include one or more catalysts, in particular amine catalysts and/or metal catalysts. Amine catalysts may include, but are not limited to, primary amine, secondary amine or tertiary amine. Useful tertiary amine catalysts non-exclusively include N,N,N',N",N"-pentamethyldiethyltriamine, N,N-dicyclohexylmethylamine; N,N-ethyldiisopropylamine; N,N-dimethylcyclohexylamine; N,N-dimethylisopropylamine; N-methyl-N-isopropylbenzylamine; N-methyl-N-cyclopentylbenzylamine; N-isopropyl-N-sec-butyl-trifluoroethylamine; N,N-diethyl-(α-phenylethyl)amine, N,N,N-tri-n-propylamine, or combinations thereof. Useful secondary amine catalysts non-exclusively include dicyclohexylamine; t-butylisopropylamine ; di-t-butylamine; cyclohexyl-t-butylamine; di-sec-butylamine, dicyclopentylamine; di-(α-trifluoromethylethyl)amine; di-(α-phenylethyl)amine; or combinations thereof.
Useful primary amine catalysts non-exclusively include: triphenylmethylamine and 1,1-diethyl-n-propylamine.

Other useful amines includes morpholines, imidazoles, ether containing compounds, and the like. These include
dimorpholinodiethylether
N-ethylmorpholine
N-methylmorpholine
bis(dimethylaminoethyl) ether
imidizole
n-methylimidazole
1,2-dimethylimidazole
dimorpholinodimethylether
N,N,N',N',N",N"-pentamethyldiethylenetriamine
N,N,N',N',N",N"-pentaethyldiethylenetriamine
N,N,N',N',N",N"-pentamethyldipropylenetriamine
bis(diethylaminoethyl) ether
bis(dimethylaminopropyl) ether.

When an amine catalyst is used, it is present in the polyol premix composition in an amount of from about 0.05 wt.% to about 3.0 wt.%, preferably from about 0.05 wt.% to about 2.5 wt.%, and more preferably from about 0.1 wt.% to about 2.0 wt. %, by weight of the polyol premix composition.

Catalysts may also include one or a combination of metal catalysts, such as, but not limited to organometallic catalysts. The term organometallic catalyst refers to and is intended to cover in its broad sense both to preformed organometalic complexes and to compositions (including physical combinations, mixtures and/or blends) comprising metal carboxylates and/or amidines. In preferred embodiments, the catalyst of the present invention comprises: (a) one or more metal selected from the group consisting of zinc, lithium, sodium, magnesium, barium, potassium, calcium, bismuth, cadmium, aluminum, zirconium, tin, or hafnium, titanium, lanthanum, vanadium, niobium, tantalum, tellurium, molybdenum, tungsten, cesium; (b) in a complex and/or composition with an amidine compound; and/or (c) in a complex and/or composition with an aliphatic compound, aromatic compound and/or polymeric carboxylate.

Preferred among the amidine compounds for certain embodiments are those which contain catalytic amidine groups, particularly those having a heterocyclic ring (with the linking preferably being -N=C-N-), for example an imidazoline, imidazole, tetrahydropyrimidine, dihydropyrimidine or pyrimidine ring. Acyclic amidines and guanidines can alternatively be used. One preferred catalyst complex/composition comprises zinc (II), a methyl, ethyl, or propyl hexannoate, and a imidazole (preferably an lower alkylimidazole such as methylimidazole. Such catalysts may include Zn(1-methylimidazole)₂(2-ethylhexannoate)₂, together with, di-ethylene glycol, preferably as a solvent for the catalyst. To this end, one exemplified catalyst includes, but is not limited to, a catalyst sold under the trade designation K-Kat XK-614 by King Industries of Norwalk, Connecticut. Other catalysts include those sold under the trade designation Dabco K 15 and/or Dabco MB 20 by Air Products, Inc.

When one or a combination of metal catalysts are used, such a catalyst(s) is present in the polyol premix composition in an amount of from about 0.5 wt.% to about 10 wt.%, or preferably from about 1.0 wt.% to about 8.0 wt.% by weight of the polyol premix composition.

The preparation of polyurethane or polyisocyanurate foams using the compositions described herein may follow any of the methods well known in the art can be employed, see Saunders and Frisch, Volumes I and II Polyurethanes Chemistry and technology, 1962, John Wiley and Sons, New York, N.Y. or Gum, Reese, Ulrich, Reaction Polymers, 1992, Oxford University Press, New York, N.Y. or Klempner and Sendijarevic, Polymeric Foams and Foam Technology, 2004, Hanser Gardner Publications, Cincinnati, OH. In general, polyurethane or polyisocyanurate foams are prepared by combining an isocyanate, the polyol premix composition, and other materials such as optional flame retardants, water, colorants, or other additives. These foams can be rigid, flexible, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials, including but not limited to blowing agents and certain silicone surfactants, comprise the first component, commonly referred to as the "A" component. The polyol mixture composition, including surfactant, catalysts, blowing agents, and optional other ingredients comprise the second component, commonly referred to as the "B" component. In any given application, the "B" component may not contain all the above listed components, for example some formulations omit the flame retardant if flame retardancy is not a required foam property. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, water, and even other polyols can be added as a stream to the mix head or reaction site. Most conveniently, however, they are all, with the exception of water, incorporated into one B component as described above.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, araliphatic, aromatic, and heterocyclic isocyanates which are well known in the field of polyurethane chemistry. These are described in, for example, U.S. patents 4,868,224; 3,401,190; 3,454,606; 3,277,138; 3,492,330; 3,001,973; 3,394,164; 3,124.605; and 3,201,372. Preferred as a class are the aromatic polyisocyanates.

Representative organic polyisocyanates correspond to the formula:

R(NCO)_{z}

wherein R is a polyvalent organic radical which is either aliphatic, aralkyl, aromatic or mixtures thereof, and z is an integer which corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate and the like; the aromatic triisocyanates such as 4,4',4"-triphenylmethane triisocyanate, 2,4,6-toluene triisocyanates; the aromatic tetraisocyanates such as 4,4'-dimethyldiphenylmethane-2,2'5,5-'tetraisocyanate, and the like; arylalkyl polyisocyanates such as xylylene diisocyanate; aliphatic polyisocyanate such as hexamethylene-1,6-diisocyanate, lysine diisocyanate methylester and the like; and mixtures thereof. Other organic polyisocyanates include polymethylene polyphenylisocyanate, hydrogenated methylene diphenylisocyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4'-biphenyl diisocyanate, and 3,3'-dimethyldiphenylmethane-4,4'-diisocyanate; Typical aliphatic polyisocyanates are alkylene diisocyanates such as trimethylene diisocyanate, tetramethylene diisocyanate, and hexamethylene diisocyanate, isophorene diisocyanate, 4, 4'-methylenebis(cyclohexyl isocyanate), and the like; typical aromatic polyisocyanates include m-, and p-phenylene disocyanate, polymethylene polyphenyl isocyanate, 2,4- and 2,6-toluenediisocyanate, dianisidine diisocyanate, bitoylene isocyanate, naphthylene 1,4-diisocyanate, bis(4-isocyanatophenyl)methene, bis(2-methyl-4-isocyanatophenyl)methane, and the like. Preferred polyisocyanates are the polymethylene polyphenyl isocyanates, Particularly the mixtures containing from about 30 to about 85 percent by weight of methylenebis(phenyl isocyanate) with the remainder of the mixture comprising the polymethylene polyphenyl polyisocyanates of functionality higher than 2. These polyisocyanates are prepared by conventional methods known in the art. In the present invention, the polyisocyanate and the polyol are employed in amounts which will yield an NCO/OH stoichiometric ratio in a range of from about 0.9 to about 5.0. In the present invention, the NCO/OH equivalent ratio is, preferably, about 1.0 or more and about 3.0 or less, with the ideal range being from about 1.1 to about 2.5. Especially suitable organic polyisocyanate include polymethylene polyphenyl isocyanate, methylenebis(phenyl isocyanate), toluene diisocyanates, or combinations thereof.

In the preparation of polyisocyanurate foams, trimerization catalysts are used for the purpose of converting the blends in conjunction with excess A component to polyisocyanurate-polyurethane foams. The trimerization catalysts employed can be any catalyst known to one skilled in the art, including, but not limited to, glycine salts, tertiary amine trimerization catalysts, quaternary ammonium carboxylates, and alkali metal carboxylic acid salts and mixtures of the various types of catalysts. Preferred species within the classes are potassium acetate, potassium octoate, and N-(2-hydroxy-5-nonylphenol)methyl-N-methylglycinate.

Conventional flame retardants can also be incorporated, preferably in amount of not more than about 20 percent by weight of the reactants. Optional flame retardants include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl N,N-bis(2-hydroxyethyl) aminomethylphosphonate, dimethyl methylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, aluminum trihydrate, polyvinyl chloride, melamine, and the like. Other optional ingredients can include from 0 to about 7 percent water, which chemically reacts with the isocyanate to produce carbon dioxide. This carbon dioxide acts as an auxiliary blowing agent. In the case of this invention, the water cannot be added to the polyol blend but, if used, can be added as a separate chemical stream. Formic acid is also used to produce carbon dioxide by reacting with the isocyanate and is optionally added to the "B" component.

In addition to the previously described ingredients, other ingredients such as, dyes, fillers, pigments and the like can be included in the preparation of the foams. Dispersing agents and cell stabilizers can be incorporated into the present blends. Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount by weight ranging from about 5 parts to 100 parts per 100 parts of polyol. A pigment which can be used herein can be any conventional pigment such as titanium dioxide, zinc oxide, iron oxide, antimony oxide, chrome green, chrome yellow, iron blue siennas, molybdate oranges and organic pigments such as para reds, benzidine yellow, toluidine red, toners and phthalocyanines.

The polyurethane or polyisocyanurate foams produced can vary in density from about 0.5 pounds per cubic foot to about 60 pounds per cubic foot, preferably from about 1.0 to 20.0 pounds per cubic foot, and most preferably from about 1.5 to 6.0 pounds per cubic foot. The density obtained is a function of how much of the blowing agent or blowing agent mixture disclosed in this invention plus the amount of auxiliary blowing agent, such as water or other co-blowing agents is present in the A and / or B components, or alternatively added at the time the foam is prepared. These foams can be rigid, flexible, or semi-rigid foams, and can have a closed cell structure, an open cell structure or a mixture of open and closed cells. These foams are used in a variety of well known applications, including but not limited to thermal insulation, cushioning, flotation, packaging, adhesives, void filling, crafts and decorative, and shock absorption.

Among many uses, the foams of the present invention may be used to insulate buildings (e.g. building envelope) or any construction where energy management and/or insulation from temperature fluctuations on its exterior side are desirable. Such structures include any standard structure known in the art including, but not limited to those, manufactured from clay, wood, stone, metals, plastics, cement, or the like, including, but not limited to homes, office buildings, or other structures residential, commercial, or otherwise were energy efficiency and insulation may be desirable.

In one non-limiting aspect of the invention, a two or more part foamable composition in accordance with the foregoing embodiments may be provided. The components of a two part system, commonly referred to as the A-side and the B-side may be delivered through separate lines into a mixing head, such as a high pressure impingement-type mixer or a low pressure mechanical type mixer. In those applications where more than two components are used, the components are provided through separate lines into a mixing head, such as a high pressure impingement-type mixer or a low pressure mechanical type mix head. The streams of the first, second and optionally additional component streams intersect in the mix head and mix with each other either by direct impingement of the high pressure component streams or by mechanical mixing of the low pressure component streams. Because the components are under pressure inside the mix head, the blowing agent does not vaporize. However, as the mixture exits the mix head and enters into atmospheric pressure, the blowing agent vaporizes as reaction of the polyisocyanate and polyol (to form the polyurethane or polyisocyanurate) occurs. Crosslinking and molecular weight captures the bubbles generated by the evolution of the gas before they can coalesce and escape and forms cells that provide the insulative function.

Such foams, in certain embodiments, may be produced in a discontinuous or a continuous process. In a discontinuous process, individual panel or other pars are produced in a mold or other suitable device. In continuous processes, the foamable mixture is dispensed onto a moving conveyor and allowed to rise between the upper and lower facers of the panel. Typical facers include aluminum foil, roofing felt, aluminum, steel, particle board, plywood, FRP or other similar materials. In certain preferred embodiments, the foams of the present invention may be used to insulate a building envelope such as a house, commercial building, or the like. In alternative embodiments, the foams of the present invention may serve as a roofing insulation for flat or pitched roofs, as walls, ceilings, and floors in residential, commercial, governmental, and industrial buildings. In yet other embodiments, the foam panels may be used to insulate and provide structure to cold storage buildings, walk in coolers and freezers, insulated transportation container, such as rail cars, trucks, and iso containers, and the like.

The following non-limiting examples serve to illustrate the invention.

### EXAMPLES

### EXAMPLE 1 - 1233zd and 1234ze Properties

Table 1 and Table 2, below, list the properties of 1233zd(E) and 1234ze(E) compared to other commonly used blowing agents. Note that 1233zd(E) exhibits certain key physical properties, such as boiling point and flammability, similar to 245fa and with certain advantages compared to cyclopentane or 365mfc.

The GWP of 1233zd(E) of <7, is more than two orders of magnitude lower than that of currently utilized HFCs, and is more than one order of magnitude lower than the present limitations in the EU F-Gas Regulation. 1234ze(E) has properties similar to 134a. Like 1233zd(E), the GWP of 1234ze(E) of <6 is more than two orders of magnitude lower than 134a and is within the EU F-Gas Regulation limit.

| *Table 1. Liquid Blowing Agent Properties* | | | | | | |
|---|---|---|---|---|---|---|
| Properties | | 1233zd(E) | 245fa | C-C5 | 365mfc | 141b |
| Mol. Weight | | 130 | 134 | 70 | 148 | 117 |
| Boiling Point | | | | | | |
| | °C | 19.0 | 15.3 | 49.3 | 40.2 | 32.0 |
| | °F | 66.2 | 59.5 | 120.7 | 104.4 | 89.6 |
| Flashpoint | | | | | | |
| | °C | None | None | -7.0 | -27.0 | None |
| | °F | None | None | 19.0 | -16.6 | None |
| LFL/UFL (Vol% in Air) | | None | None | 1.5-8.7 | 3.6-13.3 | 7.6-17.7 |
| GWP, 100yr¹ | | 7 | 1030 | 11² | 794 | 725 |
| VOC | | Pending Exempt | No | Yes | No | No |
| PEL³ | | 300 | 300 | 600 | 1000 | 500 |

| | | | | | | |
|---|---|---|---|---|---|---|
| 1. 2007 Technical Summary. Climate Change 2007: They Physical Science Basis. Contribution of Working Group 1 to the Fourth Assessment Report of the Intergovernmental Panel on Climate Change. (except where noted) 2. Generally accepted value 3. Manufacturers' literature expect where noted | | | | | | |

| *Table 2. Gaseous Blowing Agent Properties* | | | | | |
|---|---|---|---|---|---|
| Properties | | 1234ze(E) | 134a | 22 | 142b |
| Mol. Weight | | 114 | 102 | 86.5 | 100.5 |
| Boiling Point | | | | | |
| | °C | -19.0 | -26.3 | -40.8 | -9.8 |
| | °F | -2.2 | -15.3 | -41.4 | 14.4 |
| Flashpoint | | | | | |
| | °C | None | None | None | None |
| | °F | None | None | None | None |
| LFL/UFL (Vol% in Air) | | None | None | None | 8.0-15.4 |
| GWP, 100yr¹ | | 6 | 1430 | 1810 | 2310 |
| PEL² | | 1000 | 1000 | 1000 | 1000 |

| | | | | | |
|---|---|---|---|---|---|
| 1. 2007 Technical Summary. Climate Change 2007: They Physical Science Basis. Contribution of Working Group 1 to the Fourth Assessment Report of the Intergovernmental Panel on Climate Change. (except where noted) 2. Manufacturers' literature expect where noted | | | | | |

### EXAMPLE 2 - Panel Foam Application - 1233zd

The thermal and physical properties of 1233zd(E) were compared against 245fa, cyclopentane and 141b using a formulation known to be used in production of Insulated Metal Panels (IMP). In addition to single component studies, foams were also made using various combinations of 1233zd(E)/cyclopentane blends and were evaluated.

### A. Generic Formula

The compositions of a generic formulation with various blowing agents are listed in Table 3. The generic polyurethane foam formulation utilized was developed to yield a free rise density of about 1.9 lb/ft³ with approximately a 20% overpack. The resulting density ranged from 2.2 lb/ft³ to 2.3 lb/ft³ with all foams prepared by a hand-mixing method with processing conditions given in Table 4. The blended foam was poured into a mold at 104°F and allowed to cure for 15 minutes before demolding. All physical property and thermal conductivity testing were performed at least 24 hours after foams were prepared. Note this experiment is designed as a "drop-in" replacement study to determine the blowing agent feasibility using common parameters found in industry. The generic formulation used was not optimized for 1233zd(E), suggesting actual field results could be significantly better with an optimized formulation.

| *Table 3. Generic Formulation of Discontinuous Panel Foam Evaluated* | | | | | |
|---|---|---|---|---|---|
| Components | 1233zd(E) | 245fa | C-C5 | 141b | |
| Polyether Polyol | 65.0 | 65.0 | 65.0 | 65.0 | |
| Polyester Polyol | 35.0 | 35.0 | 35.0 | 35.0 | |
| Catalysts | 2.0 | 2.0 | 2.0 | 2.0 | |
| Surfactant | 1.5 | 1.5 | 1.5 | 1.5 | |
| Flame Retardant | 22.0 | 22.0 | 22.0 | 22.0 | |
| Water | 2.0 | 2.0 | 2.0 | 2.0 | |
| Blowing Agent | 23.3 | 24.0 | 12.5 | 20.9 | |
| | | | | | |
| Isocyanate, Index = 110 | | 143.6 | 143.6 | 143.6 | 143.6 |
| | | | | | |

| *Table 4. Hand-Mixing Method* - *Preparation Parameters and Conditions* | | | | | |
|---|---|---|---|---|---|
| Parameters | | | Conditions | | |
| Component Temperature | | | | | |
| | Polyol Premix | | 68°F/20°C | | |
| | Isocyanate | | 68°F/20°C | | |
| Stirring | | | | | |
| | Speed | | 5000 RPM | | |
| | Duration | | 5 seconds | | |
| | | | 4"x12"x12" / 10cm x 30cm x | | |
| Mold Dimensions | | | 30cm | | |
| Mold Temperature | | | 104°F/40°C | | |

| *Table 5. Densities of Foams with Various Blowing agents and Blowing Agent Blends* | | | | | |
|---|---|---|---|---|---|
| Physical Properties | 1233zd(E) | | 245fa | C-C5 | 141b |
| Free Rise Density, kg/m³ | 29.3 | | 28.3 | 29.7 | 29.8 |
| Core Density, kg/m³ | 37.6 | | 36.7 | 37.1 | 37.2 |

| | 1233zd(E) /Cyclopentane mole% Ratio | | | | |
|---|---|---|---|---|---|
| Physical Properties | 100/0 | 75/25 | 50/50 | 25/75 | 0/100 |
| Free Rise Density, kg/m³ | 29.3 | 29.3 | 28.6 | 27.3 | 29.7 |
| Core Density, kg/m³ | 37.6 | 37.4 | 37.4 | 38.0 | 37.7 |

| *Table 6A. Foam Reactivity and Properties with Various Blowing Agents* | | | | | |
|---|---|---|---|---|---|
| Foam Reactivity | 1233zd(E) | | 245fa | C-C5 | 141b |
| Gel Time, sec | 55 | | 55 | 52 | 52 |
| Tack Free Time, sec | 100 | | 100 | 95 | 95 |
| Dimensional Stability, ΔVol %¹ | 1233zd(E) | | 245fa | C-C5 | 141b |
| -29°C, Aged 28 Days | -1.21 | | -1.75 | -1.13 | -1.61 |
| 90°C, Aged 28 Days | 3.14 | | 3.86 | 7.67 | 9.62 |
| 70°C/95%RH, Aged 28 Days | 3.83 | | 3.98 | 6.42 | 14.96 |
| Compressive Strength¹ | 1233zd(E) | | 245fa | C-C5 | 141b |
| Parallel, kPa | 277.5 | | 284.5 | 249.9 | 268.0 |
| Perpendicular, kPa | 187.5 | | 198.5 | 165.2 | 190.7 |

| | | | | | |
|---|---|---|---|---|---|
| ¹ Dimensional stability and compressive strength of foam were evaluated as per ASTM D-2126-04 and ASTM D-161 | | | | | |

The free-rise density and core density of the polyurethane foams are reported in Table 5, and show essentially identical results. The comparisons of physical and thermal properties are provided in Table 6A with foams made with 1233zd(E) demonstrating excellent reactivity and physical properties compared to those with 245fa. Also, they demonstrate significantly better dimensional stability at high temperatures than those with cyclopentane or 141b, and considerably higher compressive strength than those with cyclopentane.

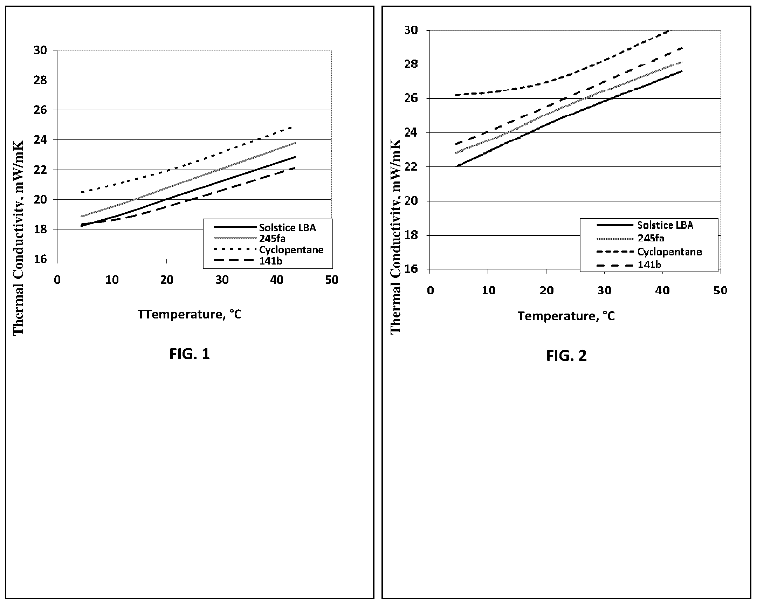

Figure 1 and Figure 2 show the initial and 3-months aged thermal conductivity of foams with various blowing agents, respectively. Foams containing 1233zd(E) provide better thermal insulation value, approximately 4% lower initial thermal conductivity, than those with 245fa at all evaluated mean temperatures, 4°C, 13°C, 24°C and 43°C. A similar phenomenon was also noted after 3 months aging at room temperature, however the differences in lambda were even greater.

This suggests that foams made with 1233zd(E) retain their thermal insulation value better than those made with other blowing agents. Although foams with 141b appear to have better thermal insulation value than those with 1233zd(E) at higher temperatures, the trend begins to show a reverse behavior at approximately 7°C and lower, which falls into the operating temperature range of pour-in-place applications, such as walk-in freezers and cold storage. Furthermore, after 3 months of aging, foams with 1233zd(E) demonstrate considerably better thermal insulation value than all blowing agents, including 141b, at all evaluated temperatures. The thermal conductivity of foams made with cyclopentane is the highest among all tested samples regardless of evaluated temperatures and aging durations.

It is also important to note the thermal conductivity of foams made with cyclopentane begins to level off when the evaluated temperatures are below approximately 24°C, reducing its effectiveness in cold storage applications, such as coolers and freezers that require foams with superior thermal insulation value at 4°C and 13°C correspondingly.

### B. 1233zd(E)/Cyclopentane Blends

The generic formulation of discontinuous panel foam was also utilized to evaluate the performance of various 1233zd(E)/cyclopentane blends. Similarly, the foam reactivity and physical properties, such as dimensional stability, compressive strength, and thermal properties were reported.

| *Table 6B. Foam Reactivity and Properties with 1233zd(E)*/*Cyclopentane Blends* | | | | | |
|---|---|---|---|---|---|
| | 1233zd(E)/Cvclopentane mole% Ratio | | | | |
| Physical Properties | 100/0 | 75/25 | 50/50 | 25/75 | 0/100 |
| Gel Time, sec | 55 | 54 | 53 | 52 | 52 |
| Tack Free Time, sec | 100 | 99 | 95 | 85 | 100 |
| Dimensional Stability, ΔVol %¹ | 100/0 | 75/25 | 50/50 | 25/75 | 0/100 |
| -29°C, Aged 28 Days | -1.21 | -1.15 | -1.53 | -2.15 | -1.13 |
| 90°C, Aged 28 Days | 3.14 | 4.66 | 5.03 | 3.44 | 7.67 |
| 70°C/95%RH, Aged 28 Days | 3.83 | 3.40 | 5.93 | 5.58 | 6.42 |
| Compressive Strength² | 100/0 | 75/25 | 50/50 | 25/75 | 0/100 |
| Parallel, kPa | 277.5 | 275.8 | 241.6 | 247.0 | 249.9 |
| Perpendicular, kPa | 187.5 | 180.0 | 171.4 | 195.8 | 165.2 |

| | | | | | |
|---|---|---|---|---|---|
| ¹ Dimensional stability of foam was evaluated as per ASTM D-2126-04 ² Compressive strength of foam was evaluated as per ASTM D-1621 | | | | | |

Referring to Table 6B, blending 1233zd(E) with cyclopentane appears to enhance various physical properties when compared to foams with only cyclopentane. For instance, at high temperature conditions, such as 90°C and 70°C/95%RH, the dimensional stability is improved as the concentration of 1233zd(E) increased in the blend. Also, it is important to stress that foams with 75/25mole% 1233zd(E)/cyclopentane provides almost identical foam reactivity and similar superior physical properties to foams blown with 1233zd(E) alone. However, mixtures of cyclopentane and 1233zd(E) are considered as flammable which probably require explosion-proof equipment for processing.

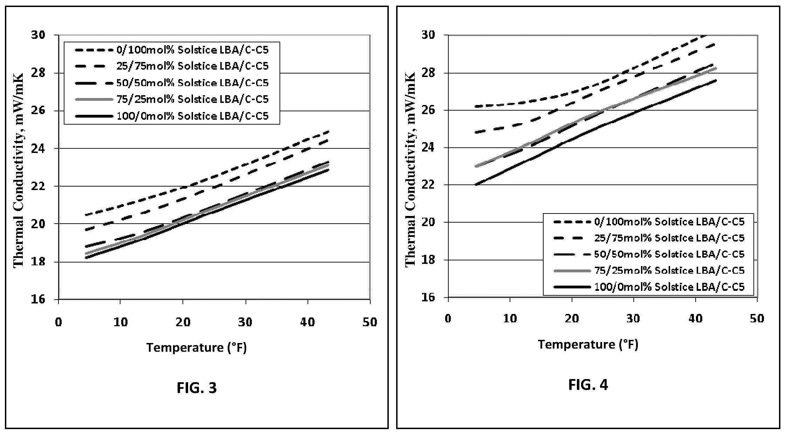

According to Figure 3, the thermal insulation value of foam deteriorates as the percentage of cyclopentane in the blend increases, but the trend is non-linear. Blending of up to 50 mole% of cyclopentane with 1233zd(E) demonstrates no significant impact on initial thermal conductivity throughout the temperatures evaluated. This is particularly beneficial to pour-in-place applications which are looking for foam with a balance of superior thermal properties and acceptable cost of blowing agent. As illustrated in Figure 4 the aged thermal conductivity of foams with a composition equal to or higher than 75mole% cyclopentane appears to have a more noticeable plateau effect than the others. Although certain 1233zd(E)/cyclopentane blends may be able to provide flexibility in formulating, foams with only pure 1233zd(E) are still the best with respect to both initial and aged thermal insulation values. Also note that the 1233zd(E) foams retain their k-factor better than any of the blends evaluated.

### EXAMPLE 3 - DISCONTINUOUS PANEL FOAM EVALUATIONS WITH 1233ZD BLENDS

In the experiments below, all foams were prepared utilizing an Edge-Sweets high pressure foam machine with processing conditions given in Table 7. Polyol premix and isocyanate were mixed through an impingement mechanism at the head while the mixture shot into a mold preheated to 120°F to 125°F, and allowed to cure in a 130°F oven for 20 minutes before demolding. All physical property and thermal conductivity testing was performed at least 24 hours after the foam was prepared.

| *Table 7. Discontinuous Panel Foams Preparation Parameters and Conditions* | | |
|---|---|---|
| Parameters | | Conditions |
| Machine Pressure | | 2000psi / 13.8 MPa |
| Foam Output | | |
| | Flow Output | 15lb/min / 6.8kg/min |
| | Polyol Temperature | 70°F/21°C |
| | Isocyanate Temperature | 70°F/21°C |
| | Injection Time | 3.0 - 3.2 seconds |
| Mold Dimensions | | 24" x 12" x 2" / 30.5cm x 15.3cm x 5.1cm |
| Mold Temperature | | 120°F/48.9°C |

A generic polyurethane foam formulation with 1233zd(E) and components that can be easily sourced in the US is listed in Table 8. This generic formulation was developed to yield a free rise density of about 1.9 lb/ft³. With approximately 20% overpack. The density of the prepared foams ranged from 2.2 lb/ft³ to 2.3 lb/ft³. The amount of each of the blowing agent blends were calculated such that the total moles of blowing agent in the formulation were constant. This experiment is considered as a "drop-in" replacement study to determine the blowing agent blends' feasibility. The formulation was not optimized for any particular blowing agent that was used in this study.

| *Table 8. Generic Formulation of Discontinuous Panel Foam Evaluated* | | |
|---|---|---|
| Components | | |
| Polyether Polyol | 65.0 | |
| Polyester Polyol | 35.0 | |
| Catalysts | 2.0 | |
| Surfactant | 1.5 | |
| Flame Retardant | 22.0 | |
| Water | 2.0 | |
| 1233zd(E) | 23.2 | |
| | | |
| Isocyanate Index = 110 | 143.6 | |

When the free rise density and core density of the polyurethane foams prepared with blowing agents or blowing agent blends are compared in Table 9, they are within a 10% range of each other. Since all foams have an insignificant difference in density, comparisons of their physical, thermal properties are considered valid.

| *Table 9. Densities of Foams with Various Blowing Agent Blends* | | | | | |
|---|---|---|---|---|---|
| | 1233zd(E)/Iso-pentane mole% Ratio | | | | |
| Physical Properties | 100/0 | 75/25 | 50/50 | 25/75 | 0/100 |
| Free Rise Density, lb/ft³ | 1.87 | 1.90 | 1.88 | 1.86 | 1.81 |
| Free Rise Density, kg/m³ | 29.95 | 30.44 | 30.11 | 29.79 | 28.99 |
| Core Density, lb/ft³ | 2.21 | 2.13 | 2.02 | 2.11 | 2.07 |
| Core Density, kg/m³ | 35.40 | 34.12 | 32.36 | 33.80 | 33.16 |

| | 1233zd(E)/N-pentane mole% Ratio | | | | |
|---|---|---|---|---|---|
| Physical Properties | 100/0 | 75/25 | 50/50 | 25/75 | 0/100 |
| Free Rise Density, lb/ft³ | 1.87 | 1.92 | 1.86 | 1.84 | 1.86 |
| Free Rise Density, kg/m³ | 29.95 | 30.76 | 29.79 | 29.47 | 29.79 |
| Core Density, lb/ft³ | 2.21 | 2.29 | 2.11 | 2.28 | 2.19 |
| Core Density, kg/m³ | 35.40 | 36.68 | 33.80 | 36.52 | 35.08 |

| | 1233zd(E)/Cyclopentane mole% Ratio | | | | |
|---|---|---|---|---|---|
| Physical Properties | 100/0 | 75/25 | 50/50 | 25/75 | 0/100 |
| Free Rise Density, lb/ft³ | 1.87 | 1.80 | 1.91 | 1.88 | 1.95 |
| Free Rise Density, kg/m³ | 29.95 | 28.83 | 30.60 | 30.11 | 31.24 |
| Core Density, lb/ft³ | 2.21 | 2.28 | 2.22 | 2.31 | 2.24 |
| Core Density, kg/m³ | 35.40 | 36.52 | 34.92 | 37.00 | 35.88 |

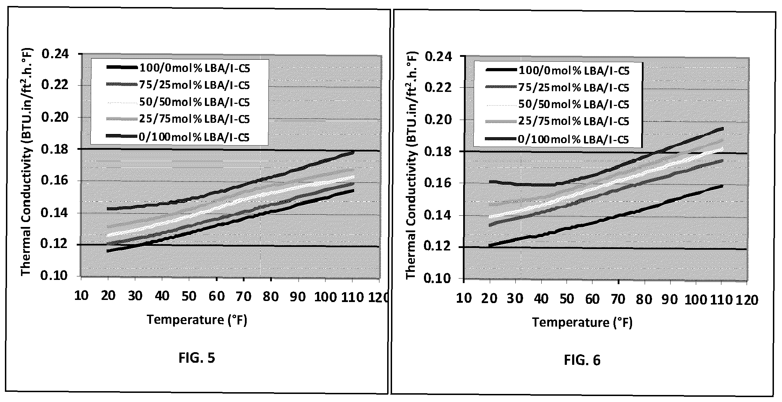

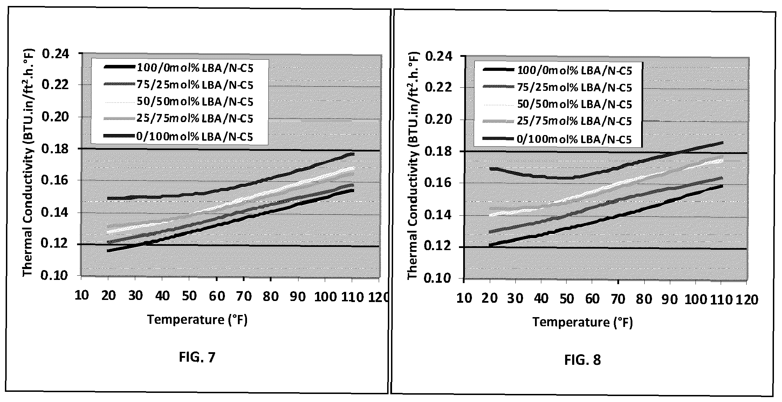

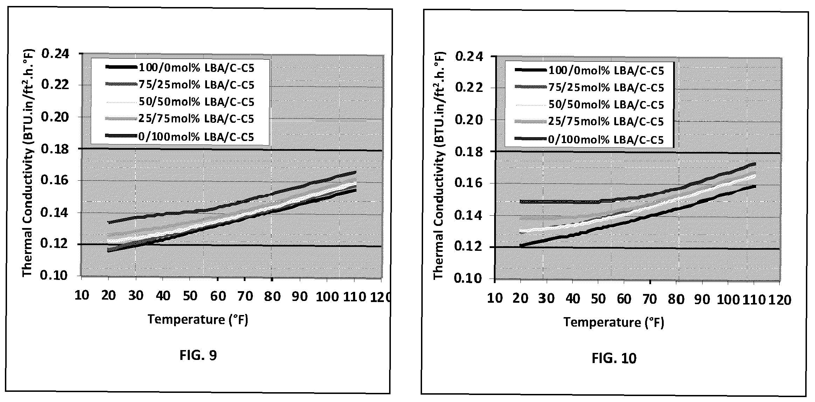

Figures 5 to 10 show the initial and 28-day aged thermal conductivity of foams with various 1233zd(E)/hydrocarbon bends as the blowing agent, with the data points used for such figures being provided below in Tables 10 - 11. The thermal conductivity of these foams were evaluated at five different mean temperatures, 20°F, 40°F, 55°F, 70°F and 110°F. Generally, foams made with 1233zd(E) provide the best thermal insulation value, i.e. the lowest thermal conductivity, than foams with any 1233zd(E) and hydrocarbon blends or pure hydrocarbons as the blowing agent. Unlike blending 1233zd(E) with iso-pentane and n-pentane, blending 1233zd(E) with cyclopentane at 75/25mole% appears to provide a k-factor almost comparable to pure 1233zd(E) across all evaluated temperatures, from 20°F to 110°F. Foams with 50/50mole% 1233zd(E)/cyclopentane blend provide similar thermal conductivity to that with pure 1233zd(E) only when it was measured above 50°F. Since cold storage applications, such as coolers and freezers, generally require foams with superior thermal insulation value at 20°F and 55°F respectively, the 50/50mole% 1233zd(E)/cyclopentane blend would be suitable for coolers application only while the 75/25mole% 1233zd(E)/cyclopentane blend would be favorable for both freezers and coolers applications.

Unlike a blend with cyclopentane, a 1233zd(E) and iso-pentane or n-pentane blend does not present similar phenomenon. Although thermal conductivity decreases, i.e. the thermal insulation value increases, as the ratio of 1233zd(E) in the blend increases, the change to the thermal conductivity of foam is proportional to the change of 1233zd(E) concentrations. This behavior appears to be more noticeable for foams with a 1233zd(E) and iso-pentane blend.

After 28 days of aging, foam with 1233zd(E) demonstrates a considerably better thermal insulation value than foams with hydrocarbons or other blowing agent blends at all evaluated temperatures. Usually, the thermal conductivity of foams decreases as the evaluated temperature decreases. The thermal conductivity of foams with any of the evaluated hydrocarbons demonstrates a more noticeable plateau effect than it does with those foams with 1233zd(E)/hydrocarbon blends. In the case of iso-pentane and n-pentane, the thermal conductivity of foams with these hydrocarbons actually increases, i.e. the thermal insulation value decreases, when the mean temperature dropped lower than 55°F. This behavior significantly reduces the effectiveness of these foams in cold storage applications, such as coolers and freezers, which require foams with superior thermal insulation value at 20°F and 55°F respectively. However, this undesired behavior can be considerably diminished, and ultimately eliminated, by adding various amounts of 1233zd(E). For instance, combining merely 25mole% 1233zd(E) with 75mole% iso-pentane eliminates the suggested undesired behavior while about 50mole% and 75mole% 1233zd(E) is required to obtain a linear relationship between thermal conductivity and temperature for n-pentane and cyclopentane respectively. It is important to note that the 1233zd(E)/cyclopentane blend still provides the best thermal insulation value when compared to 1233zd(E) blends with the other two hydrocarbons.

**Table 10**

| Initial Thermal Conductivity Data in Btu.in/ft².hr.°F | | | | | |
|---|---|---|---|---|---|
| 1233zd/Isopentane (mole%) | 20°F | 40°F | 55°F | 75°F | 110°F |
| 100/0 | 0.1160 | 0.1233 | 0.1299 | 0.1392 | 0.1549 |
| 75/25 | 0.1201 | 0.1274 | 0.1342 | 0.1435 | 0.1596 |
| 50/50 | 0.1253 | 0.1333 | 0.1408 | 0.1510 | 0.1636 |
| 25/75 | 0.1311 | 0.1380 | 0.1453 | 0.1557 | 0.1685 |
| 0/100 | 0.1424 | 0.1458 | 0.1508 | 0.1607 | 0.1790 |
| | | | | | |

| 123 3zd/N-pentane (mole%) | 20°F | 40°F | 55°F | 75°F | 110°F |
|---|---|---|---|---|---|
| 100/0 | 0.1160 | 0.1233 | 0.1299 | 0.1392 | 0.1549 |
| 75/25 | 0.1216 | 0.1281 | 0.1345 | 0.1438 | 0.1580 |
| 50/50 | 0.1277 | 0.1343 | 0.1412 | 0.1513 | 0.1690 |
| 25/75 | 0.1311 | 0.1352 | 0.1403 | 0.1488 | 0.1654 |
| 0/100 | 0.1486 | 0.1501 | 0.1526 | 0.1598 | 0.1777 |
| | | | | | |

| 1233zd/Cyclopentane (mole%) | 20°F | 40°F | 55°F | 75°F | 110°F |
|---|---|---|---|---|---|
| 100/0 | 0.1160 | 0.1233 | 0.1299 | 0.1392 | 0.1549 |
| 75/25 | 0.1170 | 0.1253 | 0.1317 | 0.1407 | 0.1577 |
| 50/50 | 0.1218 | 0.1268 | 0.1327 | 0.1417 | 0.1593 |
| 25/75 | 0.1257 | 0.1308 | 0.1360 | 0.1441 | 0.1620 |
| 0/100 | 0.1341 | 0.1392 | 0.1420 | 0.1501 | 0.1667 |

**Table 11**

| 28-Day Thermal Conductivity Data in Btu.in/ft².hr.°F | | | | | |
|---|---|---|---|---|---|
| 1233zd/Isopentane (mole%) | 20°F | 40°F | 55°F | 75°F | 110°F |
| 100/0 | 0.1215 | 0.1278 | 0.134 | 0.1425 | 0.1595 |
| 75/25 | 0.1339 | 0.1421 | 0.1491 | 0.1590 | 0.1755 |
| 50/50 | 0.139 | 0.1466 | 0.1542 | 0.1648 | 0.1826 |
| 25/75 | 0.1466 | 0.1512 | 0.1585 | 0.1693 | 0.188 |
| 0/100 | 0.1612 | 0.1589 | 0.1634 | 0.1745 | 0.1955 |
| | | | | | |

| 123 3zd/N-pentane (mole%) | 20°F | 40°F | 55°F | 75°F | 110°F |
|---|---|---|---|---|---|
| 100/0 | 0.1215 | 0.1278 | 0.134 | 0.1425 | 0.1595 |
| 75/25 | 0.1293 | 0.1360 | 0.1428 | 0.1520 | 0.1641 |
| 50/50 | 0.1399 | 0.1453 | 0.1525 | 0.1627 | 0.1755 |
| 25/75 | 0.1438 | 0.1456 | 0.1504 | 0.1605 | 0.1782 |
| 0/100 | 0.1694 | 0.1643 | 0.1646 | 0.1728 | 0.1869 |
| | | | | | |

| 1233zd/Cyclopentane (mole%) | 20°F | 40°F | 55°F | 75°F | 110°F |
|---|---|---|---|---|---|
| 100/0 | 0.1215 | 0.1278 | 0.1340 | 0.1425 | 0.1595 |
| 75/25 | 0.1296 | 0.1342 | 0.1402 | 0.1493 | 0.1659 |
| 50/50 | 0.1300 | 0.1338 | 0.1392 | 0.1484 | 0.1659 |
| 25/75 | 0.1377 | 0.1392 | 0.1426 | 0.1502 | 0.168 |
| 0/100 | 0.1485 | 0.1486 | 0.1498 | 0.1551 | 0.1733 |

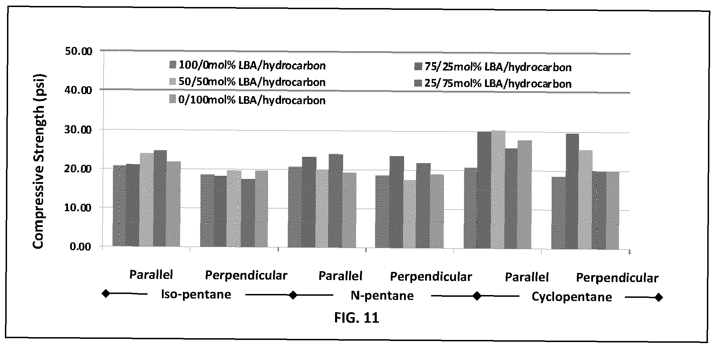

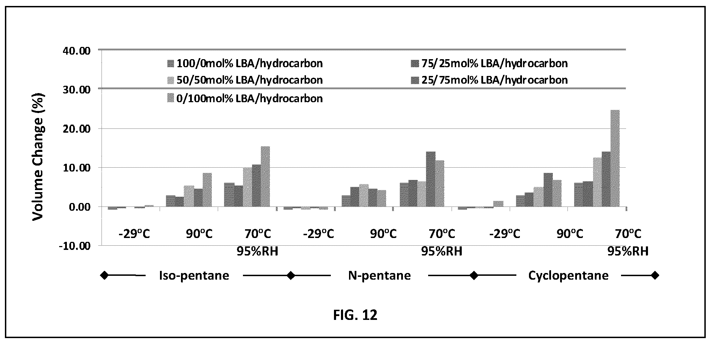

Physical properties, such as dimensional stability and compressive strength, of foams with various blowing agent blends are shown in Table 12. Foams were evaluated after 28 days aging at -29°C, 90°C and 70°C/95% relative humidity as per ASTM D-2126-09. Furthermore, the compressive strength of foams was tested at both parallel and perpendicular directions as per ASTM D-1621-10. As shown in Figure 11, foams with 1233zd(E)/hydrocarbon blends demonstrate comparable perpendicular and parallel compressive strength which ranged between 20psi and 30psi depending on the blowing agent combination. On the other hand, the dimensional stability of foams at 90°C and 70°C/95%R.H. improved gradually as the 1233zd(E) loading increases in the blowing agent blend, as shown in Figure 12. Foams with 1233zd(E) demonstrate at least 50% better dimensional stability at hot environments when compared to those with hydrocarbons.

| *Table 12. Properties of Foam with 1233zd(E)*/*Hydrocarbon Blowing Agent Blends* | | | | | |
|---|---|---|---|---|---|
| | 1233zd(E)/Isopentane mole% Ratio | | | | |
| Dimensional Stability, ΔVol %¹ | 100/0 | 75/25 | 50/50 | 25/75 | 0/100 |
| -29°C, Aged 28 Days | -0.73 | -0.21 | -0.29 | -0.21 | 1.38 |
| 90°C, Aged 28 Days | 2.71 | 3.64 | 4.87 | 8.46 | 6.75 |
| 70°C/95%RH, Aged 28 Days | 6.21 | 6.27 | 12.48 | 13.94 | 24.48 |
| Compressive Strength² | 100/0 | 75/25 | 50/50 | 25/75 | 0/100 |
| Parallel, psi | 20.8 | 21.0 | 23.8 | 24.8 | 21.7 |
| Perpendicular, psi | 18.7 | 18.2 | 19.6 | 17.5 | 19.7 |

| | 1233zd(E)/N-pentane mole% Ratio | | | | |
|---|---|---|---|---|---|
| Dimensional Stability, ΔVol %¹ | 100/0 | 75/25 | 50/50 | 25/75 | 0/100 |
| -29°C, Aged 28 Days | -0.73 | -0.27 | -0.61 | -0.27 | -0.55 |
| 90°C, Aged 28 Days | 2.71 | 4.83 | 5.71 | 4.68 | 4.38 |
| 70°C/95%RH, Aged 28 Days | 6.21 | 6.64 | 6.55 | 14.05 | 11.74 |
| Compressive Strength² | 100/0 | 75/25 | 50/50 | 25/75 | 0/100 |
| Parallel, psi | 20.8 | 23.3 | 20.1 | 23.9 | 19.4 |
| Perpendicular, psi | 18.7 | 23.4 | 17.4 | 21.6 | 19.0 |

| | 1233zd(E)/Cyclopentane mole% Ratio | | | | |
|---|---|---|---|---|---|
| Dimensional Stability, ΔVol %¹ | 100/0 | 75/25 | 50/50 | 25/75 | 0/100 |
| -29°C, Aged 28 Days | -0.73 | -0.40 | -0.09 | -0.32 | 0.29 |
| 90°C, Aged 28 Days | 2.71 | 2.47 | 5.28 | 4.60 | 8.54 |
| 70°C/95%RH, Aged 28 Days | 6.21 | 5.37 | 10.10 | 10.50 | 15.30 |
| Compressive Strength² | 100/0 | 75/25 | 50/50 | 25/75 | 0/100 |
| Parallel, psi | 20.8 | 30.1 | 30.3 | 25.8 | 27.8 |
| Perpendicular, psi | 18.7 | 29.7 | 25.2 | 20.1 | 20.0 |

| | | | | | |
|---|---|---|---|---|---|
| ¹ Dimensional stability of foam was evaluated as per ASTM D-2126-09 ² Compressive strength of foam was evaluated as per ASTM D-1621-10 | | | | | |

All foams were evaluated for flammability performance using the DIN 4102 B2 test method. In order to pass the DIN 4102-1: Class B2 material evaluation, the flame height could not surpass the gauge located 15cm above the ignition point, during the first 15 seconds of the test.

| *Table 13. Measured Flame Height of Foam Samples During the Flammability Test* | | | | | |
|---|---|---|---|---|---|
| | 1233zd(E)/Isopentane mole% Ratio | | | | |
| B2 Test Evaluation¹ | 100/0 | 75/25 | 50/50 | 25/75 | 0/100 |
| Flame Height, cm | 10 | 11 | 12 | 12 | 17 |

| | 1233zd(E)/N-pentane mole% Ratio | | | | |
|---|---|---|---|---|---|
| B2 Test Evaluation¹ | 100/0 | 75/25 | 50/50 | 25/75 | 0/100 |
| Flame Height, cm | 10 | 12 | 12 | 14 | 19 |

| | 1233zd(E)/Cyclopentane mole% Ratio | | | | |
|---|---|---|---|---|---|
| B2 Test Evaluation¹ | 100/0 | 75/25 | 50/50 | 25/75 | 0/100 |
| Flame Height, cm | 10 | 11 | 12 | 13 | 15 |

| | | | | | |
|---|---|---|---|---|---|
| ¹ Flammability of foams was evaluated as per DIN 4102-1: Class B2 Materials | | | | | |

According to Table 13, foam with 1233zd(E) has the best flame retardancy when compared to those with any of the 1233zd(E)/hydrocarbon blends evaluated. For foams with hydrocarbons, unlike that with cyclopentane, those with isopentane and n-pentane have failed the B2 evaluation requirements. From the data, adding 1233zd(E) improves the flame retardancy of foams with isopentane, n-pentane or cyclopentane.

### CLAUSES

1. A thermal insulating foam comprising thermoset polymer having a plurality of closed cells and a gaseous composition contained in a plurality of said closed cells, said gaseous composition comprising greater than about 25 mole% and less than about 75 mole% trans-1-chloro-3,3,3-trifluoropropene and greater than 25 mole% and less than about 75 mole % of a second component selected from the group consisting of cyclopentane, isopentane, n-pentane and combinations of two or more of these, said percentages based on the total of said trans-1-chloro-3,3,3-trifluoropropene and said second component.
2. The thermal insulating foam of clause 1 wherein said K-value after 28 days of aging at 20 °F is not greater than about 0.15.
3. The thermal insulating foam of clause 1 wherein said K-value after 28 days of aging at 20 °F is not greater than about 0.13.
4. The thermal insulating foam of clause 1 wherein said second component is present in an amount of less than about 60 mole %.
5. The thermal insulating foam of clause 1 wherein said second component is present in an amount of less than about 50 mole %.
6. The thermal insulating foam of clause 1 wherein said second component comprises n-pentane in an amount of greater than about 50 mole% and less than about 75 mole %.
7. The thermal insulating foam of clause 6 wherein said K-value at 20 °F after 28 days of aging is not greater than about 0.14.
8. The thermal insulating foam of clause 6 wherein said K-value after 28 days of aging at 40 °F is not greater than about 0.14.
9. The thermal insulating foam of clause 1 wherein said second component comprises isopentane.
10. The thermal insulating foam of clause 1 wherein said second component consists essentially of iso-pentane.
11. The thermal insulating foam of clause 10 wherein said K-value after 28 days of aging at 40 °F is not greater than about 0.15.
12. The thermal insulating foam of clause 1 wherein said second component comprises cyclo-pentane in an amount less than about 50 mole %.
13. The thermal insulating foam of clause 12 wherein said K-value after 28 days of aging at 20 °F is not greater than about 0.13.
14. The thermal insulating foam of clause 12 wherein said K-value after 28 days of aging at 55 °F is not greater than about 0.14.
15. The thermal insulating foam of clause 1 wherein said second component comprises cyclo-pentane.
16. The thermal insulating foam of clause 1 wherein said second component consists essentially of cyclo-pentane.
17. The thermal insulating foam of clause 16 wherein said K-value after 28 days of aging at 55 °F is not greater than about 0.14.
18. The thermal insulating foam of clause 16 wherein said K-value after 28 days of aging at 20 °F is not greater than about 0.13.
19. A pour-in-place foam panel comprising the foam of clause 1.
20. The pour-in-place foam panel of clause 19, wherein the gaseous composition comprises a blend of trans-1-chloro3,3,3-trifluoropropene and cyclopentane.
21. The pour-in-place foam panel of clause 20, wherein cyclopentane is present in an amount from greater than about 25 mole % to about 75 mole %.
22. A thermal insulating article comprising a foam of clause 1.
23. A polyol premix for forming an polyurethane or polyisocyanurate pour-in-place foam panel comprising a blowing agent composition greater than about 25 mole% and less than about 75 mole% trans-1-chloro-3,3,3-trifluoropropene and greater than 25 mole% and less than about 75 mole % of a second component selected from the group consisting of cyclopentane, isopentane, n-pentane and combinations of two or more of these, said percentages based on the total of said trans-1-chloro-3,3,3-trifluoropropene and said second component.
24. The polyol premix of clause 23 wherein the polyol component is present in an amount of from about 60 wt.% to about 95 wt.% of the premix and wherein the blowing agent composition is in an amount of from about 1 wt.% to about 30 wt.%.
25. The polyol premix of clause 24, wherein the blowing agent composition further comprises at least one additional blowing agent other than trans-1-chloro-3,3,3-trifluoropropene or the second component, which is selected from the group consisting of water, organic acids that produce CO₂ and/or CO, hydrocarbons; ethers, halogenated ethers; esters, alcohols, aldehydes, ketones, pentafluorobutane; pentafluoropropane; hexafluoropropane; heptafluoropropane; trans-1,2 dichloroethylene; methylal, methyl formate, 1-chloro-1,2,2,2-tetrafluoroethane (HCFC-124); 1,1-dichloro-1-fluoroethane (HCFC-141b); 1,1,1,2-tetrafluoroethane (HFC-134a); 1,1,2,2-tetrafluoroethane (HFC-134); 1-chloro 1,1-difluoroethane (HCFC-142b); 1,1,1,3,3-pentafluorobutane (HFC-365mfc); 1,1,1,2,3,3,3-heptafluoropropane (HFC-227ea); trichlorofluoromethane (CFC-11); dichlorodifluoromethane (CFC-12); dichlorofluoromethane (HCFC-22); 1,1,1,3,3,3-hexafluoropropane (HFC-236fa); 1,1,1,2,3,3-hexafluoropropane (HFC-236e); 1,1,1,2,3,3,3-heptafluoropropane (HFC-227ea), difluoromethane (HFC-32); 1,1-difluoroethane (HFC-152a); 1,1,1,3,3-pentafluoropropane (HFC-245fa); 1,3,3,3-tetrafluoropropene (HFO-1234ze); 1,1,1,4,4,4-hexafluorobut-2-ene (HFO-1336mzzm); butane; isobutane; and combinations thereof.
26. The polyol premix of clause 24, further comprising one or more additional agents selected from the group consisting of a silicone surfactant, a non-silicone surfactant, a metal catalyst, an amine catalyst, a flame retardant, and combinations thereof.

## Claims

1. A thermal insulating foam comprising thermoset polymer having a plurality of closed cells and a gaseous composition contained in a plurality of said closed cells, said gaseous composition comprising greater than about 25 mole% and less than about 75 mole% trans-1-chloro-3,3,3-trifluoropropene and greater than 25 mole% and less than about 75 mole % cyclopentane, said percentages based on the total of said trans-1-chloro-3,3,3- trifluoropropene and said cyclopentane.

2. The thermal insulating foam of claim 1 wherein said K-value after 28 days of aging at 20 °F is not greater than about 0.15.

3. The thermal insulating foam of claim 1 wherein said K-value after 28 days of aging at 20 °F is not greater than about 0.13.

4. The thermal insulating foam of claim 1 wherein said K-value at 20 °F after 28 days of aging is not greater than about 0.14.

5. The thermal insulating foam of claim 1 wherein said K-value after 28 days of aging at 40 °F is not greater than about 0.14.

6. The thermal insulating foam of claim 1 wherein said gaseous composition further comprises iso-pentane.

7. The thermal insulating foam of claim 1 wherein said gaseous composition consists essentially of trans-1-chloro-3,3,3-trifluoropropene, cyclopentane and optionally isopentane.

8. The thermal insulating foam of claim 1 wherein said gaseous composition comprises cyclopentane in an amount of at least about 50 mole %.

9. The thermal insulating foam of claim 1 wherein said gaseous composition comprises cyclopentane in an amount of from about 25 mole % to about 50 mole % .

10. The thermal insulating foam of claim 1 wherein said gaseous composition further comprises isopentane.

11. A pour-in-place foam panel comprising the foam of claim 1.

12. A thermal insulating article comprising a foam of claim 1.

13. A polyol premix for forming an polyurethane or polyisocyanurate foam comprising a blowing agent composition comprising greater than about 25 mole% and less than about 75 mole% trans-1-chloro-3,3,3-trifluoropropene and greater than 25 mole% and less than about 75 mole % of cyclopentane, said percentages based on the total of said trans-1- chloro-3,3,3-trifluoropropene and said second component.

14. The polyol premix of claim 13 wherein the polyol component is present in an amount of from about 60 wt.% to about 95 wt.% of the premix and wherein the blowing agent composition is in an amount of from about 1 wt.% to about 30 wt.%.

15. A cold storage unit for marinating the temperature of an article below about room temperature comprising a thermal insulating foam comprising thermoset polymer having a plurality of closed cells and a gaseous composition contained in a plurality of said closed cells, said gaseous composition comprising greater than about 25 mole% and less than about 75 mole% trans-1-chloro-3,3,3-trifluoropropene and greater than 25 mole% and less than about 75 mole % cyclopentane, said percentages based on the total of said trans-1-chloro-3,3,3-trifluoropropene and said cyclopentane, wherein the K-value of said foam after 28 days of aging at 20 °F is not greater than about 0.15.
